## Europäisches Patentamt
## European Patent Office
## Office européen des brevets

(19)

(11) Veröffentlichungsnummer: **0 011 680**
**B1**

(12)
# EUROPÄISCHE PATENTSCHRIFT

(45) Veröffentlichungstag der Patentschrift:
04.11.81

(51) Int. Cl.³: **G 01 R 31/00**, B 60 R 21/08

(21) Anmeldenummer: **79102850.9**

(22) Anmeldetag: **08.08.79**

(54) **Prüfschaltung für die Auslösevorrichtung einer den Schutz der Insassen eines Fahrzeugs während eines Unfalles dienenden Sicherheitseinrichtung.**

(30) Priorität: **28.11.78 DE 2851333**

(43) Veröffentlichungstag der Anmeldung:
**11.06.80 Patentblatt 80/12**

(45) Bekanntmachung des Hinweises auf die Patenterteilung:
**04.11.81 Patentblatt 81/44**

(84) Benannte Vertragsstaaten:
**DE FR GB IT SE**

(56) Entgegenhaltungen:
**DE-B-2 251 402**
**DE-B2-2 222 038**
**DE-B2-2 454 424**
**US-A-3 622 974**

(73) Patentinhaber: **ROBERT BOSCH GMBH, Postfach 50, D-7000 Stuttgart 1 (DE)**

(72) Erfinder: **Suchowerskyj, Wadym, Dr.-Ing., Holdergasse 26, D-7141 Schwieberdingen (DE)**
Erfinder: **Seibel, Berthold, Dipl.-Ing., Mozartstrasse 6, D-7141 Schwieberdingen (DE)**
Erfinder: **Werner, Peter, Dipl.-Ing., Im Sommerrain 15, D-7135 Wiernsheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Prüfschaltung für die Auslösevorrichtung einer den Schutz der Insassen eines Fahrzeugs während eines Unfalles dienenden Sicherheitseinrichtung

### Stand der Technik

Die Erfindung geht aus von einer Prüfschaltung nach der Gattung des Hauptanspruchs. Es ist schon eine solche Prüfschaltung aus der DE-AS 2 222 038 bekannt, bei der während eines sehr einfachen Prüfprogramms die Endstufe für die Auslösung der Sicherheitseinrichtung blockiert wird. Dies hat den Nachteil, daß eine defekte Endstufe durch das Prüfprogramm nicht erkannt werden kann. Insbesondere wenn solche Sicherheitseinrichtungen als sogenannte Airbag-Systeme ausgebildet sind, bei denen automatisch beim Aufprall des Fahrzeugs auf ein Hindernis wenigstens ein Luftkissen zum Schutz der Insassen aufgeblasen wird, so ist eine Überprüfung sämtlicher Komponenten des Systems notwendig, da eine Fehlauslösung ebenso wie das Nichtfunktionieren unangenehme Konsequenzen nach sich ziehen kann.

### Vorteile der Erfindung

Die erfindungsgemäße Prüfschaltung mit den kennzeichnenden Merkmalen des Hauptanspruchs hat demgegenüber den Vorteil, daß neben der Überprüfung der Elektronik, die zur Erkennung von Sensorsignalen dient, die bei einem Unfall auftreten, auch die Endstufe, insbesondere der Endstufentransistor, überprüft wird, dessen Schalten einen Strom über das Zündelement der Sicherheitseinrichtung auslöst. Damit wird eine Erhöhung der Funktionssicherheit einer Auslösevorrichtung erreicht.

Durch die in den Unteransprüchen aufgeführten Maßnahmen sind vorteilhafte Weiterbildungen und Verbesserungen der im Hauptanspruch angegebenen Prüfschaltung möglich. Besonders vorteilhaft ist es, in einem ersten Zeitintervall eines Prüfprogramms sowohl den Endstufen--Halbleiterschalter wie auch den dazu in Reihe geschalteten Halbleiterschalter zu sperren und das dazwischenliegende Potential als Kontrollsignal auszuwerten. Dadurch wird eine erhöhte Sicherheit gegen Fehlauslösungen beim Anlegen der Betriebsspannung erreicht, da ein Leitendwerden des Endstufen-Halbleiterschalters infolge eines Fehlsignals zu diesem Zeitpunkt ohne Wirkung wäre. Weiterhin ist es besonders vorteilhaft, den Spannungswert zwischen den beiden Halbleiterschaltern durch zwei Schwellwertstufen auszuwerten, da hierdurch nicht nur die Funktion der Schalter, sondern auch die angelegte Spannung überprüft werden kann.

### Zeichnung

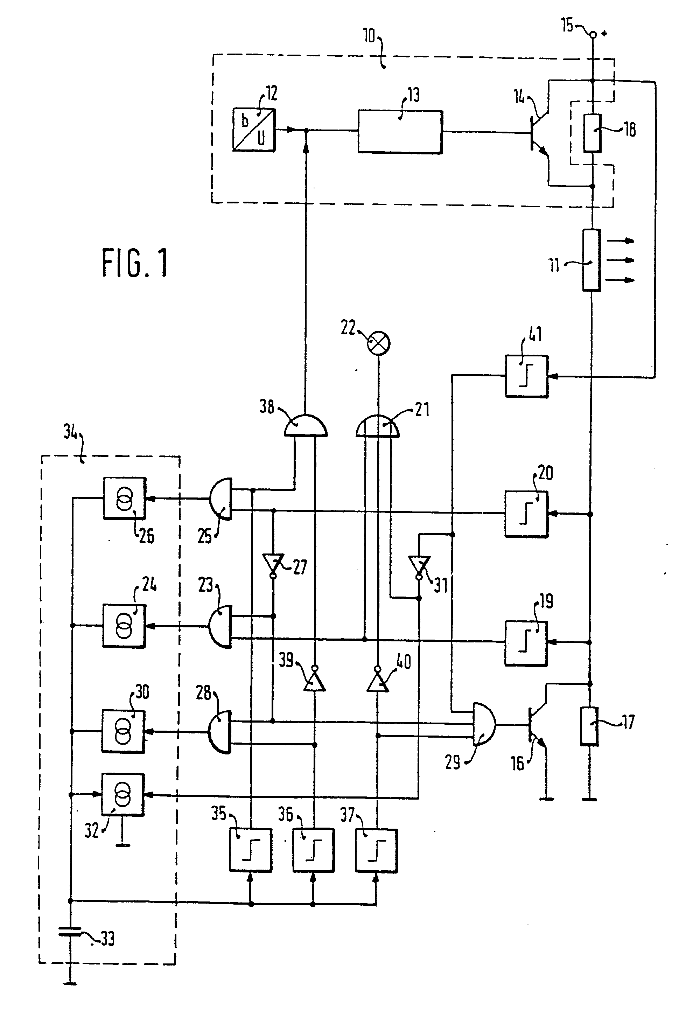

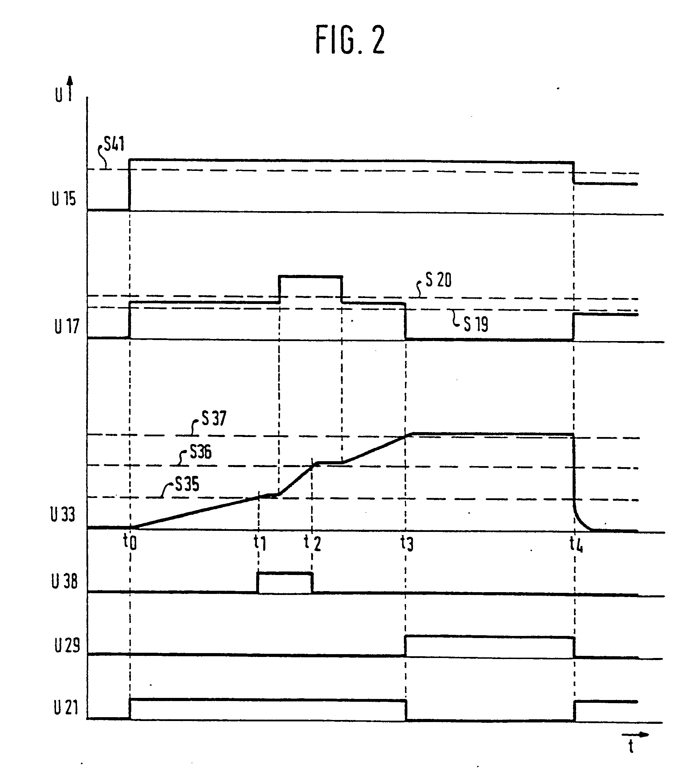

Ein Ausführungsbeispiel der Erfindung ist in der Zeichnung dargestellt und in der nachfolgenden Beschreibung näher erläutert. Es zeigt Fig. 1 eine schaltungsmäßige Ausgestaltung des Ausführungsbeispiels und Fig. 2 ein Signaldiagramm zur Erläuterung der Wirkungsweise.

### Beschreibung des Ausführungsbeispiels

Eine Auslösevorrichtung 10 für eine Sicherheitseinrichtung 11 besteht aus einem Beschleunigungsaufnehmer 12, an dessen Ausgang entweder ein beschleunigungsproportionales Signal erzeugt wird oder ein Signal, das erst bei Überschreiten einer festlegbaren Beschleunigung erzeugt wird. Dieses Signal wird einer Auswerteelektronik 13 zugeführt, in der dieses Signal daraufhin untersucht wird, ob seine Ursachen in einem Unfall, d. h. in einem Auffahren auf ein Hindernis begründet liegen, oder ob sonstige Beschleunigungsvorgänge zu seiner Entstehung führten, wie z. B. eine starke Bremsung oder ein Steinschlag. Wird ein Unfall erkannt, so wird ein Signal erzeugt, durch das über die Basis des nachgeschalteten Endstufentransistors 14 dieser in den stromleitenden Zustand versetzbar ist. Dadurch kann ein Strom von einer mit dem positiven Pol einer Versorgungsspannungsquelle verbundenen Klemme 15 aus über die Schaltstrecke des Transistors 14 über die in Reihe dazu geschaltete Sicherheitseinrichtung 11 fließen. Diese Sicherheitseinrichtung 11 kann z. B. aus einem Glühdraht bestehen, durch den ein explosives chemisches Gemisch gezündet werden kann, das daraufhin explosionsartig einen Luftsack (Airbag) füllt. Ein Ausführungsbeispiel einer solchen Auslösevorrichtung 10 ist im eingangs angegebenen Stand der Technik näher beschrieben.

Die Sicherheitseinrichtung 11 ist über die Parallelschaltung eines Transistors 16 mit einem Widerstand 17 an Masse angeschlossen. Parallel zur Schaltstrecke des Endstufen-Transistors 14 ist ebenfalls ein Widerstand 18 geschaltet. Die Widerstände 17, 18 sind hochohmig im Vergleich zum Widerstandswert der Sicherheitseinrichtung 11. Diese ist so ausgelegt, daß ein Strom, der sich bei einer Reihenschaltung der Sicherheitseinrichtung 11 mit einem der Widerstände 17, 18 ergibt, nicht ausreicht, die Sicherheitseinrichtung 11 zu zünden.

Der Verknüpfungspunkt zwischen der Sicherheitseinrichtung 11 und dem Widerstand 17 ist mit den Eingängen zweier Schwellwertstufen 19, 20 verbunden. Der Ausgang der Schwellwertstufe 19 ist einmal über ein ODER-Gatter 21 (und ev. einen diesem nachgeschalteten Verstärker) mit einer Kontrolleuchte 22 verbunden, und weiterhin über ein UND-Gatter 23 an den Eingang einer ersten Stromquelle 24 angeschlossen. Der Ausgang der Schwellwertstufe 20 ist einmal über ein UND-Gatter 25 mit dem Eingang einer zweiten Stromquelle 26 verbunden und weiterhin über einen Inverter 27 sowohl an einen weiteren Eingang des UND-Gatters 23, an einen Eingang eines UND-Gatters 28 sowie an einen Eingang eines UND-Gatters 29 angeschlossen. Der Ausgang des UND-Gatters 28 ist mit dem Eingang einer dritten Stromquelle 30 verbunden. Der Ausgang des UND-Gatters 29 ist an die Basis des Transistors 16 angeschlossen. Die Klemme 15 ist über eine Schwellwertstufe 41 einmal an einem weiteren Eingang des UND-Gatters 29 angeschlossen und weiterhin über einen Inverter 31 sowohl mit einem weiteren Eingang des ODER-Gatters 20 wie auch mit dem Steuereingang einer Entladestromquelle 32 verbunden.

Die Ausgänge der Stromquellen 24, 26, 30 und der Eingang der Entladestromquelle 32 sind über einen Kondensator 33 an Masse angeschlossen. Die Stromquellen 24, 26, 30, 32 bilden zusammen mit dem Kondensator 33 einen Integrator 34 mit drei Integrationskonstanten. Dieser Integrator 34 bildet zusammen mit drei nachgeschalteten Schwellwertstufen 35 bis 37 ein System von Zeitgliedern. Der Ausgang der Schwellwertstufe 35 ist einmal mit einem weiteren Eingang des UND-Gatters 25 und weiterhin über ein UND-Gatter 38 mit dem Eingang der Auswerteelektronik 13 der Auslösevorrichtung 10 verbunden. Der Ausgang der Schwellwertstufe 36 ist einmal an einen weiteren Eingang des UND-Gatters 28 und weiterhin über einen Inverter 39 an einen weiteren Eingang des UND-Gatters 38 angeschlossen. Der Ausgang der Schwellwertstufe 37 schließlich ist an einen weiteren Eingang des UND-Gatters 29 und weiterhin über einen Inverter 40 an einen weiteren Eingang des ODER-Gatters 20 angeschlossen.

Die Wirkungsweise des in Fig. 1 dargestellten Ausführungsbeispiels soll im folgenden anhand des in Fig. 2 dargestellten Signaldiagramms erläutert werden. Dabei sind die dargestellten Spannungen entweder Ausgangsspannungen von Bauteilen, die das entsprechende Bezugszeichen tragen, oder aber Spannungen, die an entsprechend bezeichneten Bauteilen anliegen.

Wird zum Zeitpunkt t0 eine Spannung U15 an die Klemme 15 angelegt, so sind zunächst beide Transistoren 14, 16 gesperrt. An den Eingängen der beiden Schwellwertstufen 19, 20 liegt eine Spannung an, die durch das Teilerverhältnis der Widerstände 17, 18 im Zusammenhang mit dem Wert der Versorgungsspannung gegeben ist. Da der Widerstandswert Sicherheitseinrichtung 11 relativ dazu sehr niedrig ist, beeinflußt er diese Spannung praktisch nicht. Wählt man die Widerstände 17, 18 z. B. gleich groß, dann liegt an den Eingängen der Schwellwertstufen 19, 20 die halbe Versorgungsspannung. In diesem Falle wird der Schwellwert der Schwellwertstufe 19 auf einen Wert S19 eingestellt, der etwas unterhalb der halben Versorgungsspannung liegt und der Schwellwert S20 der Schwellwertstufe 20 auf einen Wert, der etwas oberhalb der halben Versorgungsspannung liegt. Sind beide Transistoren 14, 16 in Ordnung, d. h. beide gesperrt, so darf folglich nur die Schwellwertstufe 19 ansprechen. Über die beiden Ausgänge der Schwellwertstufen 19, 20 in Verbindung mit dem Inverter 27 werden demgemäß an beide Eingänge des UND-Gatters 23 1-Signale angelegt, wodurch die Stromquelle 24 eingeschaltet wird. Der Kondensator 33 lädt sich auf, bis zum Zeitpunkt t1 der Schwellwert S35 der Schwellwertstufe 35 erreicht ist. Diese Zeit muß durch Einstellen des Stroms der Stromquelle 24 oder des Schwellwertes der Schwellwertstufe 35 so eingestellt werden, daß alle Einschaltstörungen, die beim Einschalten der Versorgungsspannung gewöhnlich auftreten, vorher abgeklungen sind. Diese Störungen könnten bei einer herkömmlichen Auslösevorrichtung 10 u. U. zu einer Auslösung der Sicherheitseinrichtung führen. Die Stromquelle 24 enthält eine Begrenzervorrichtung, welche das Aufladen des Kondensators 33 auf einen Spannungswert knapp oberhalb S35 begrenzt. Dadurch wird das Überschreiten von S36 oder S37 ohne Ansteuerung der Stromquellen 26 oder 30 vermieden.

Mit dem Einschalten der Versorgungsspannung wird gleichzeitig deren Wert durch die Schwellwertstufe 41 überprüft. Liegt die Versorgungsspannung U15 unter dem minimal zulässigen Wert S41, so spricht die Schwellwertstufe 41 nicht an, das UND-Gatter 29 bleibt ständig gesperrt und über den Inverter 31 ist die Entladestromquelle 32 eingeschaltet, die ein Laden des Kondensators 33 verhindert. Diese Schwellwertstufe 41 dient der zusätzlichen Sicherheit und bewirkt auch bei einem späteren Einbruch der Versorgungsspannung U15 das Sperren des Transistors 16, wodurch Fehlauslösungen infolge Versorgungsspannungseinbrüchen vermieden werden.

Durch das Ansprechen der Schwellwertstufe 35 beginnt der zweite Programmschritt, indem über das UND-Gatter 38 ein Auslösesignal zur simulierten Auslösung der Auswerteelektronik 13 zugeführt wird. Bei ordnungsgemäßer Funktion sowohl der Auswerteelektronik 13 wie auch des Endstufentransistors 14 muß letzterer nach einer gewissen Zeitverzögerung in den stromleitenden Schaltzustand übergehen. Dadurch springt der Spannungswert an den Eingängen der Schwellwertstufen 19, 20 im wesentlichen auf den Wert der vollen Versorgungsspannung. Die Schwelle S20 wird überschritten, wodurch beide Schwellwertstufen 19, 20 ausgangsseitig ein 1-Signal erzeugen. Die Stromquelle 24 schaltet ab, und die Stromquelle 26 wird eingeschaltet. Der Kondensator 33 lädt sich entsprechend dem aus der Stromquelle 26 zugeführten Strom weiter auf, bis die Schwelle S36 der Schwellwertstufe 36 zum Zeitpunkt t2 erreicht ist. Der zweite Programmschritt ist beendet, und das simulierte Auslösesignal U38 wird durch den Inverter 39 abgeschaltet. Die Stromquelle 26 enthält wie die Stromquelle 24 eine Begrenzervorrichtung, welche das Aufladen des Kondensators 33 auf einen Wert knapp oberhalb S36 begrenzt. Bei ordnungsgemäßer Funktion muß dadurch der Endstufentransistor

14 nach einer bestimmten Zeitverzögerung wieder in den Sperrzustand übergehen, wodurch die Spannung U17 wieder auf die halbe Versorgungsspannung abfällt. Am Ausgang der Schwellwertstufe 20 wird dadurch wieder ein 0-Signal erzeugt, durch das einmal die Stromquelle 26 abgeschaltet und weiterhin über den Inverter 27 und das UND-Gatter 28 die Stromquelle 30 eingeschaltet wird. In Abhängigkeit des von der Stromquelle 30 gelieferten Stroms lädt sich der Kondensator 33 weiter auf, bis zum Zeitpunkt t3 der Schwellwert S37 der Schwellwertstufe 37 erreicht ist. Durch das Ausgangssignal der Schwellwertstufe 37 wird über das UND-Gatter 29 der Transistor 16 in seinen stromleitenden Zustand versetzt, indem er ab diesem Zeitpunkt so lange verbleibt, bis die Versorgungsspannung entweder abgeschaltet wird oder unter den Schwellwert S41 absinkt, wie es zum Zeitpunkt t4 dargestellt ist. Das Prüfprogramm ist nun zu Ende und die Auslösevorrichtung betriebsbereit.

Zu Beginn des Prüfprogramms, mit Einschalten der Versorgungsspannung, wird die Kontrolleuchte 22 eingeschaltet, da zu diesem Zeitpunkt am Ausgang der Schwellwertstufe 37 ein 0-Signal liegt. Erst mit dem Ende des Prüfprogramms, wenn also die Schwellwertstufe 37 anspricht, wird mit dem Signalende eines Signals U20 bzw. U21 die Kontrolleuchte 22 ausgeschaltet. Diese Ausschaltung erfolgt natürlich nur dann, wenn die Versorgungsspannung über den Wert U41 liegt und die halbe Versorgungsspannung über den Wert S19. Kann infolge einer Fehlfunktion das Programm nicht zu Ende geführt werden, so leuchtet die Kontrolleuchte 22 ständig weiter und signalisiert dem Fahrer, daß in der Anlage ein Defekt vorliegt. Eine korrekte Funktion der Anlage wird dem Fahrer durch ein kurzes Aufleuchten der Kontrolleuchte 22 gemeldet.

Bei mehreren Sicherheitseinrichtungen an einem Ort kann entweder die Schaltung mehrfach ausgeführt werden oder aber es können mehrere Sicherheitseinrichtungen 11 parallel zueinander geschaltet werden. Außerdem können mehrere Sicherheitseinrichtungen 11, die von verschiedenen Endstufen 14 unabhängig voneinander angesteuert werden, mit jeweils einem Anschluß an den Kollektor des Transistors 16 gelegt und gemeinsam überwacht werden.

Eine digitale Realisierung der Prüfschaltung ist ebenfalls leicht möglich. Die Stromquellen werden dabei z. B. durch einen Zähler ersetzt, dem verschiedene Zählfrequenzen — gesteuert durch die Ausgänge der UND-Gatter 23, 25, 28 und den Ausgang des Inverters 31 — zugeführt werden. Die Schwellwertstufen 35 bis 37 werden entsprechend durch Dekodierstufen für bestimmte Zählerstände bzw. durch digitale Komparatoren ersetzt. Die Funktion der dargestellten und beschriebenen Schaltung läßt sich vorteilhaft auch durch einen Mikrorechner realisieren.

Es sei noch darauf hingewiesen, daß die Länge des simulierten Auslösesignals U38 entscheidend für die Prüfung der Auswerteelektronik 13 ist. Die Länge dieses Signals U38 kann z. B. so gewählt werden, daß die Auslösung durch die Auswerteelektronik 13 bei einem Signal dieser Länge bei ordnungsgemäßer Funktion gerade noch erfolgt. Hierzu kann der UND-Schaltung 38 eine monostabile Kippstufe nachgeschaltet werden. Liegt ein Fehler in der Auswerteelektronik bezüglich der Erkennung der richtigen Länge eines Auswertesignals vor, so kann z. B. eine Auslösung ausbleiben. Das Prüfprogramm wird dadurch gestoppt und der Fehler durch die Kontrolleuchte 22 angezeigt.

## Patentansprüche

1. Prüfschaltung für die Auslösevorrichtung (10) einer dem Schutz der Insassen eines Fahrzeugs während eines Unfalls dienenden Sicherheitseinrichtung (11), wobei nach Einschalten der Versorgungsspannung ein Prüfprogramm in der Prüfschaltung abläuft, das ein Auslösesignal beinhaltet, und wobei Mittel vorgesehen sind, durch die eine Auslösung der Sicherheitseinrichtung (11) während des Prüfprogramms verhindert wird, dadurch gekennzeichnet, daß diese Mittel aus einem Halbleiterschalter (16) bestehen, der in Reihe zum Endstufen-Halbleiterschalter (14) der Auslösevorrichtung (10) sowie zur Sicherheitseinrichtung (11) geschaltet ist und daß durch das Prüfprogramm ein gleichzeitiges Leitendwerden beider Halbleiterschalter (14, 16) verhindert wird.

2. Prüfschaltung nach Anspruch 1, dadurch gekennzeichnet, daß ein zwischen den beiden Halbleiterschaltern (14, 16) abgegriffener Spannungswert einer Schwellwertstufe (20) zuführbar ist und daß infolge eines während des Prüfprogramms erzeugten Auslösesignals erzeugte Ausgangssignal der Schwellwertstufe (20) als Kriterium für die ordnungsgemäße Funktion der Auslösevorrichtung (10) der Prüfschaltung rückgeführt wird.

3. Prüfschaltung nach Anspruch 1 oder 2, dadurch gekennzeichnet, daß beiden Halbleiterschaltern (14, 16) im Vergleich zum Widerstandswert der Sicherheitseinrichtung (11) hochohmige Widerstände (18, 17) parallel geschaltet sind und daß zwischen den beiden Halbleiterschaltern (14, 16) abgegriffene Spannungswerte zwei Schwellwertstufen (19, 20) zuführbar sind, deren Schwellwerte um einen geringen Betrag oberhalb bzw. unterhalb eines Spannungswertes liegen, der sich im gesperrten Zustand beider Halbleiterschalter (14, 16) an den Anschlußpunkten der Schwellwertstufen (19, 20) bei korrekter Versorgungsspannung einstellt.

4. Prüfschaltung nach einem der vorhergehenden Ansprüche, dadurch gekennzeichnet, daß eine Prüfprogramm-Ablaufsteuerung vorgesehen ist, wobei die Dauer der einzelnen Programmschritte durch Zeitglieder (34 bis 37) und die Reihenfolge der Programmschritte durch eine logische Verknüpfungsschaltung vorgegeben ist, wobei jeweils nur bei ordnungsgemäßer Funktion eines Programmschritts der nächste Programmschritt einschaltbar ist.

5. Prüfschaltung nach Anspruch 3 und 4, dadurch gekennzeichnet, daß in einem ersten Zeitintervall beide Halbleiterschalter (14, 16) gesperrt sind, wobei eine ordnungsgemäße Funktion durch Ansprechen nur einer Schwellwertstufe (19) signalisiert wird.

6. Prüfschaltung nach Anspruch 5, dadurch gekennzeichnet, daß ein weiterer Programmschritt in der Erzeugung eines Auslösesignals besteht, wobei eine ordnungsgemäße Funktion durch Ansprechen beider Schwellwertstufen (19, 20) signalisiert wird.

7. Prüfschaltung nach Anspruch 6, dadurch gekennzeichnet, daß ein weiterer Programmschritt mit dem Ende eines Auslösesignals beginnt, wobei eine ordnungsgemäße Funktion durch Ansprechen nur einer Schwellwertstufe (19) signalisiert wird.

8. Prüfschaltung nach einem der Ansprüche 5 bis 7, dadurch gekennzeichnet, daß ein weiterer Programmschritt in der Steuerung des in Reihe zum Endstufen-Halbleiterschalter (14) liegenden Halbleiterschalters (16) in den stromleitenden Zustand besteht, wobei eine ordnungsgemäße Funktion durch Ansprechen keiner der Schwellwertstufen (19, 20) signalisiert wird.

9. Prüfschaltung nach Anspruch 8, dadurch gekennzeichnet, daß dieser Programmschritt der letzte Programmschritt ist.

10. Prüfschaltung nach einem der vorhergehenden Ansprüche, dadurch gekennzeichnet, daß eine Kontrolleinrichtung (22) beim ersten Programmschritt ein- und beim letzten Programmschritt ausschaltbar ist.

## Claims

1. A test circuit for the release device (10) of a safety device (11) serving to protect the passengers in a vehicle during an accident, wherein, after switching on the supply voltage, a test programme, which includes a release signal, proceeds in the test circuit, and wherein means are provided through which the release of the safety device (11) is prevented during the test programme, characterised in that, the said means consist of a semi-conductor switch (16) which is connected in series with the final stage semi-conductor switch (14) of the release device (10) and with the safety device (11) and that both semi-conductor switches (14, 16) are prevented by the test programme from becoming simultaneously conductive.

2. A test circuit according to claim 1, characterised in that, a voltage value tapped off from between the two semi-conductor switches (14, 16) is transmissible to a threshold value stage (20) and that the output signal from the treshold value stage (20) generated as a result of a release signal produced during the test programme is fed back to the test circuit as a criterion for the regular function of the release device (10).

3. A test circuit according to claim 1 or 2, characterised in that, both semi-conductor switches (14, 16) are connected in parallel with resistros (18, 17) of high resistance in comparison to the resistance value of the safety device (11) and that voltage values tapped off between the two semi-conductor switches (14, 16) are transmissible to two threshold value stages (19, 20) the threshold values of which lie, by a small amount, above or below a voltage value which, in the blocked condition of both semi-conductor switches (14, 16), is present at the points of connection of the threshold value stages (19, 20) at a correct supply voltage.

4. A test circuit according to one of the preceding claims, characterised in that, a control for the test programme run is provided wherein the period of the individual programme steps is determined by timing elements (34—37) and the sequence of programme steps is determined by a logic gating circuit, whereby, only on a regular function of one programme step, can the respective subsequent programme step be initiated.

5. A test circuit according to claim 3 and 4, characterised in that, in a first time interval, both semi-conductor switches (14, 16) are blocked, whereby a regular function is signalled by the response of only one threshold value stage (19).

6. A test circuit according to claim 5, characterised in that, a further programme step continues in the generation of a release signal whereby a regular function is signalled by the response of both threshold value stages (19, 20).

7. A test circuit according to claim 6, characterised in that, a further programme step starts at the end of a release signal whereby a regular function is signalled by the response of only one threshold value stage (19).

8. A test circuit according to one of claims 5 to 7, characterised in that, a further programme step continues in the control of the semi-conductor switch (16) lying in series with the final stage semi-conductor switch (14) in the current conducting condition whereby a regular function is signalled by the response of neither of the threshold value stages (19, 20).

9. A test circuit according to claim 8, characterised in that, the said programme step is the last programme step.

10. A test circuit according to one of the preceding claims, characterised in that, an indicating device (22) can be switched on during the first programme step and can be switched off during the last programme step.

## Revendications

1. Circuit de vérification pour le dispositif de déclenchement (10) d'une installation de sécurité (11) assurant la sésurité des passagers d'un véhicule lors d'un accident, circuit de vérification dans lequel, après mise en oeuvre de la tension d'alimentation, se déroule un programme de vérification contenant un signal de déclenchement, et dans lequel sont prévus des moyens grâce auxquels un déclenchement de l'installation de sécurité pendant le programme de vérification est empêché, circuit de vérification caractérisé en ce que ces moyens sont constitués d'un commutateur à semi-conducteurs (16) branché en série par rapport au commutateur à semi-conducteurs (14) de l'étage terminal du dispositif de déclenchement (10) ainsi qu'en série avec l'installation de sécurité (11), le programme de vérification empêchant ces deux commutateurs à semi-conducteurs (14, 16) de devenir simultanément conducteurs.

2. Circuit de vérification selon la revendication 1, caractérisé en ce qu'une valeur de tension prélevée entre les deux commutateurs à semi-conducteurs (14, 16) est susceptible d'être appliquée à un étage à valeur de seuil (20), tandis que le signal de sortie de cet étage à valeur de seuil (20), engendré à la suite d'un signal de déclenchement émis pendant le programme de vérification, est recyclé dans le circuit de vérification comme critère du fonctionnement correct du dispositif de déclenchement (10).

3. Circuit de vérification selon l'une quelconque des revendications 1 et 2, caractérisé en ce que des résistances (18, 17), de haute valeur ohmique par comparaison avec la valeur de résistance de l'installation de sécurité (11), sont branchées en parallèle sur les deux commutateurs à semi-conducteurs (14, 16), tandis que des valeurs de tension prélevées entre ces deux commutateurs à semi-conducteurs (14, 16) sont susceptibles d'être appliquées à deux étages à valeur de seuil (19, 20), dont les valeurs de seuil se situent respectivement un peu au-dessus et un peu au-dessous d'une valeur de tension qui, lorsque les deux commutateurs à semi-conducteurs (14, 16) sont bloqués s'établit pour une tension d'alimentation correcte aux points de raccordement des étages à valeur de seuil (19, 20).

4. Circuit de vérification selon l'une quelconque des revendications 1 à 3, caractérisé en ce qu'il est prévu une commande de déroulement du programme de vérification, la durée des étapes individuelles du programme étant prédéterminée par des organes de temporisation (34 à 37) tandis que la succession des étapes du programme est déterminée par un circuit de combinaison logique, et ce n'est qu'en cas d'un déroulement correct d'une étape du programme que l'étape immédiatement suivante peut être enclenchée.

5. Circuit de vérification selon l'une quelconque des revendications 3 et 4, caractérisé en ce que dans un premier intervalle de temps, les deux commutateurs à semi-conducteurs (14, 16) sont bloqués un fonctionnement correct étant alors signalé par la réaction d'un seul étage (19) à valeur de seuil.

6. Circuit de vérification selon la revendication 5, caractérisé en ce qu'une autre étape du programme consiste en l'émission d'un signal de déclenchement, un fonctionnement correct étant alors signalé par la réaction des deux étages à valeur de seuil (19, 20).

7. Circuit de vérification selon la revendication 6, caractérisé en ce qu'une autre étape du programme commence avec l'achèvement du signal de déclenchement, un fonctionnement correct étant alors signalé par réaction d'un seul étage (19) à valeur de seuil.

8. Circuit de vérification selon l'une des revendications 5 à 7, caractérisé en ce qu'une autre étape du programme consiste à commander le passage à l'état conducteur du commutateur à semi-conducteurs (16) placé en série avec le commutateur à semi-conducteurs (14) de l'étage terminal, un fonctionnement correct étant alors signalé par le fait qu'aucun des étages à valeur de seuil (19, 20) ne réagit.

9. Circuit de vérification selon la revendication 8, caractérisé en ce que cette étape du programme est la dernière étape du programme.

10. Circuit de vérification selon l'une des revendications 1 à 9, caractérisé en ce qu'une installation de contrôle (22) est susceptible d'être mise en circuit lors de la première étape du programme et d'être mise hors circuit lors de la dernière étape du programme.

FIG.1

# FIG. 2